# EUROPÄISCHE PATENTANMELDUNG

(11) **EP 1 865 221 A1**
(43) Veröffentlichungstag der Anmeldung: **12.12.2007**
(21) Anmeldenummer: 07010301.5
(22) Anmeldetag: 24.05.2007
(51) Int. Cl.: F16F 15/131

(54) **Drehschwingungsdämpfungseinrichtung**

(30) Priorität: 07.06.2006 DE 102006026378; 08.02.2007 DE 102007007042
(71) Anmelder: LuK Lamellen und Kupplungsbau Beteiligungs KG, 77815 Bühl (DE)
(72) Erfinder: Birk, Albert, 77830 Bühl (DE); Thiele, Thierry, 67500 Haguenau (FR); Niess, Daniel, 67620 La Wantzenau (FR)

(57) **Zusammenfassung**

Die Erfindung betrifft eine Drehschwingungsdämpfungseinrichtung (1) mit einer Primärmasse (4) und einer Sekundärmasse (5), die entgegen der Wirkung von mindestens einem Drehschwingungsdämpfungselement (7) und mit Hilfe einer Lagereinrichtung (10), die eine axiale Anlaufscheibe (18), einen axialen Reibring (16) und eine radiale Gleitlagerhülse (14) umfasst, relativ zu der Primärmasse (4) verdrehbar ist.

Die Erfindung zeichnet sich dadurch aus, dass die axiale Anlaufscheibe drehfest mit der Primärmasse verbunden ist.

## Beschreibung

Die Erfindung betrifft eine Drehschwingungsdämpfungseinrichtung mit einer Primärmasse und einer Sekundärmasse, die entgegen der Wirkung von mindestens einem Drehschwingungsdämpfungselement und mit Hilfe einer Lagereinrichtung, die eine axiale Anlaufscheibe, einen axialen Reibring und eine radiale Gleitlagerhülse umfasst, relativ zu der Primärmasse verdrehbar ist.

Aufgabe der Erfindung ist es, eine Drehschwingungsdämpfungseinrichtung gemäß dem Oberbegriff des Anspruchs 1 insbesondere im Hinblick auf die Lagereinrichtung zu verbessern.

Die Aufgabe ist bei einer Drehschwingungsdämpfungseinrichtung mit einer Primärmasse und einer Sekundärmasse, die entgegen der Wirkung von mindestens einem Drehschwingungsdämpfungselement und mit Hilfe einer Lagereinrichtung, die eine axiale Anlaufscheibe, einen axialen Reibring und eine radiale Gleitlagerhülse umfasst, relativ zu der Primärmasse verdrehbar ist, dadurch gelöst, dass die axiale Anlaufscheibe drehfest mit der Primärmasse verbunden ist. Das liefert den Vorteil, dass die zur Verfügung stehende axiale Reibfläche vergrößert werden kann. Außerdem wird die Bildung von Reibrost unter der Anlaufscheibe vermieden.

Ein bevorzugtes Ausführungsbeispiel der Drehschwingungsdämpfungseinrichtung ist dadurch gekennzeichnet, dass der axiale Reibring zwischen der axialen Anlaufscheibe und der Sekundärmasse angeordnet ist. Der axiale Reibring ist vorzugsweise aus einem Gleitmaterial mit einem geringen Reibwert gebildet. Dadurch wird das Reibmoment beim Ausrücken einer mit der Drehschwingungsdämpfungseinrichtung ausgestatteten Kupplung gering gehalten.

Ein weiteres bevorzugtes Ausführungsbeispiel der Drehschwingungsdämpfungseinrichtung ist dadurch gekennzeichnet, dass die axiale Anlaufscheibe mindestens einen radialen Ansatz aufweist, der drehfest mit der Primärmasse verbunden ist. Der radiale Ansatz ist vorzugsweise einstückig mit der Anlaufscheibe verbunden.

Ein weiteres bevorzugtes Ausführungsbeispiel der Drehschwingungsdämpfungseinrichtung ist dadurch gekennzeichnet, dass sich der radiale Ansatz mit einem Mitnehmerelement in Eingriff befindet, das von einem Halteelement ausgeht, das an der Primärmasse befestigt ist. Vorzugsweise ist radial außen an dem Halteelement eine Reibeinrichtung gehalten, die in bestimmten Betriebszuständen zwischen der Primärmasse und der Sekundärmasse wirksam ist.

Ein weiteres bevorzugtes Ausführungsbeispiel der Drehschwingungsdämpfungseinrichtung ist dadurch gekennzeichnet, dass das Mitnehmerelement einen Mitnehmerfinger umfasst, der in eine Ausnehmung eingreift, die in dem radialen Ansatz vorgesehen ist. Die Gestalt und die Abmessungen der Ausnehmung sind an die Gestalt und die Abmessungen des Mitnehmerfingers angepasst.

Ein weiteres bevorzugtes Ausführungsbeispiel der Drehschwingungsdämpfungseinrichtung ist dadurch gekennzeichnet, dass sich der Mitnehmerfinger teilweise in axialer Richtung erstreckt. Vorzugsweise ist das Spiel der Anlaufscheibe in Umfangsrichtung gering gehalten.

Ein weiteres bevorzugtes Ausführungsbeispiel der Drehschwingungsdämpfungseinrichtung ist dadurch gekennzeichnet, dass sich der Mitnehmerfinger am Ende in radialer Richtung erstreckt. Die axiale Anlaufscheibe ist in axialer Richtung teilweise zwischen dem sich in radialer Richtung erstreckenden Ende des Mitnehmerfingers und der Primärmasse angeordnet. Dadurch wird die Anlaufscheibe insbesondere bei der Montage der Drehschwingungsdämpfungseinrichtung in axialer Richtung gehalten.

Ein weiteres bevorzugtes Ausführungsbeispiel der Drehschwingungsdämpfungseinrichtung ist dadurch gekennzeichnet, dass das Halteelement mit Hilfe von Befestigungselementen an der Primärmasse befestigt ist. Das Halteelement ist vorzugsweise mit Hilfe von Nieten an der Primärmasse befestigt.

Ein weiteres bevorzugtes Ausführungsbeispiel der Drehschwingungsdämpfungseinrichtung ist dadurch gekennzeichnet, dass der radiale Ansatz ein Durchgangsloch für eine Nietwarze aufweist, durch welche die Anlaufscheibe an der Primärmasse befestigt ist. Die Nietwarzen sind einstückig mit der Primärmasse verbunden.

Ein weiteres bevorzugtes Ausführungsbeispiel der Drehschwingungsdämpfungseinrichtung ist dadurch gekennzeichnet, dass die axiale Anlaufscheibe mehrere, insbesondere zwei oder drei, radiale Ansätze aufweist, die drehfest mit der Primärmasse verbunden sind. Die radialen Ansätze sind vorzugsweise einstückig mit der Anlaufscheibe verbunden und gleichmäßig über deren Umfang verteilt.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 eine erfindungsgemäße Drehschwingungsdämpfungseinrichtung im Längsschnitt;
Figur 2einen vergrößerten Ausschnitt aus Figur 1;
Figur 3eine perspektivische Darstellung eines Ausschnitts aus Figur 1 und
Figur 4den Ausschnitt aus Figur 3 in der Draufsicht.

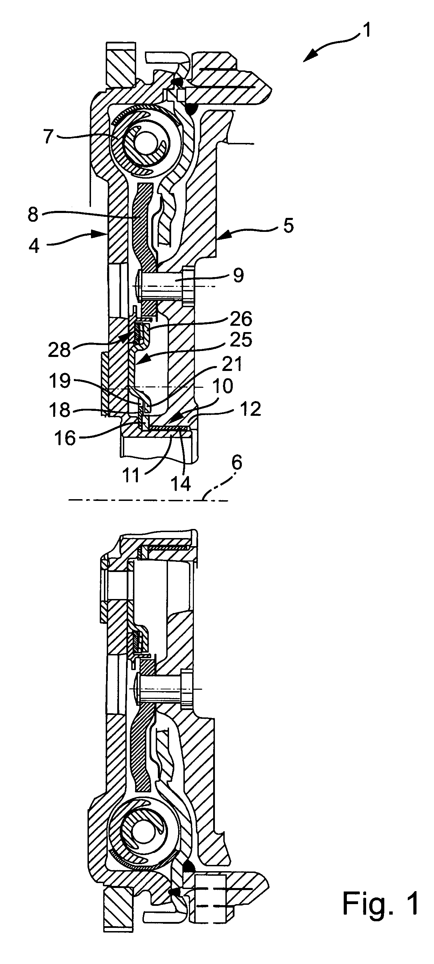

In Figur 1 ist eine Drehschwingungsdämpfungseinrichtung 1 im Längsschnitt dargestellt. Bei der Drehschwingungsdämpfungseinrichtung 1, die auch als Drehschwingungsdämpfer bezeichnet wird, handelt es sich um ein Zweimassenschwungrad mit einem Eingangsteil 4, das auch als Primärmasse bezeichnet wird. Die Primärmasse 4 ist relativ zu einem Ausgangsteil 5, das auch als Sekundärmasse bezeichnet wird, um eine Drehachse 6 drehbar. Zwischen die Primärmasse 4 und die Sekundärmasse 5 sind in bekannter Art und Weise Energiespeicherelemente 7 geschaltet, die einem Verdrehen der beiden Massen 4, 5 gegeneinander entgegen wirken. Das Ausgangsteil 5 umfasst ein Flanschelement 8, das radial außen mit dem Energiespeicherelement 7 gekoppelt ist. Radial innen ist das Flanschelement 8 mit Hilfe von Nietverbindungselementen 9 fest mit der Sekundärmasse 5 verbunden.

Die Primärmasse 4 ist an einer Kurbelwelle einer Brennkraftmaschine eines Kraftfahrzeugs befestigbar. Die Sekundärmasse 5 ist zum Beispiel Teil einer (nicht dargestellten) Kupplungseinrichtung, über welche die Kurbelwelle der Brennkraftmaschine mit einer Getriebeeingangswelle eines Getriebes eines Kraftfahrzeugs koppelbar ist.

Die Drehschwingungsdämpfungseinrichtung 1 umfasst eine Lagereinrichtung 10, die in radialer und in axialer Richtung zwischen einem Primärnabenteil 11 und einem Sekundärnabenteil 12 wirksam ist. Das Primärnabenteil 11 ist einstückig mit der Primärmasse 4 verbunden. Das Sekundärnabenteil 12 ist einstückig mit der Sekundärmasse 5 verbunden. Die Lagereinrichtung 10 umfasst eine Gleitlagerhülse 14, die in radialer Richtung zwischen dem Primärnabenteil 11 und dem Sekundärnabenteil 12 angeordnet ist. Die Lagereinrichtung 10 umfasst des Weiteren einen axialen Reibring 16, der in axialer Richtung zwischen dem Sekundärnabenteil 12 und einer axialen Anlaufscheibe 18 angeordnet ist.

Die axiale Anlaufscheibe 18 weist eine Ausnehmung 19 auf, in die ein Finger 21 eingreift, der von einem Halteelement 25 ausgeht. Das Halteelement 25 ist an der Primärmasse 4 befestigt. Der Finger 21 erstreckt sich teilweise in axialer Richtung von der Primärmasse 4 weg schräg nach innen. Das freie Ende des Fingers 21 ist abgewinkelt und erstreckt sich radial nach innen. Das abgewinkelte Ende des Fingers 21 umgreift die Anlaufscheibe 18 teilweise. Radial außen weist das Halteelement 25 eine Topfung mit einer Reibeinrichtung 28 auf, die vorzugsweise zwischen der Primärmasse 4 und der Sekundärmasse 5 wirksam ist.

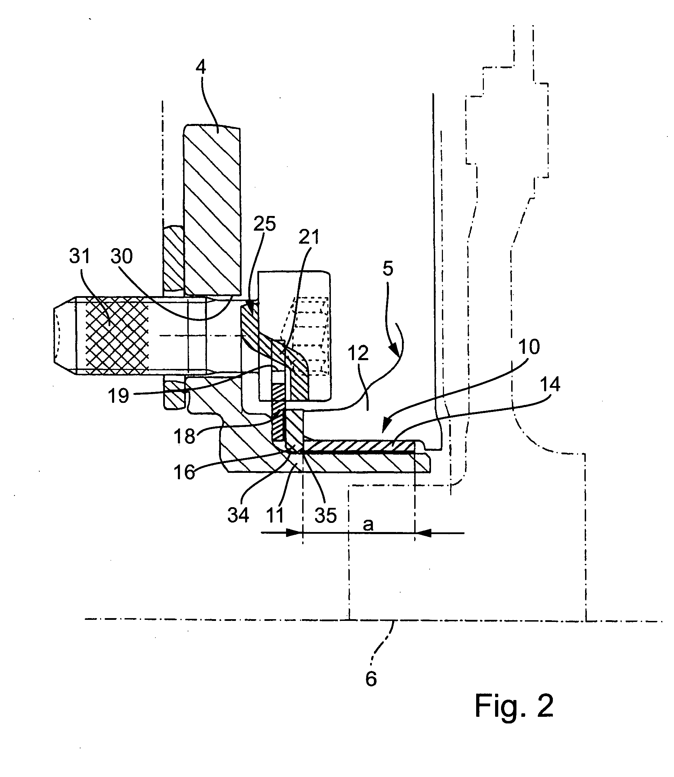

In Figur 2 ist ein Ausschnitt aus Figur 1 mit dem Finger 21 vergrößert dargestellt. In Figur 2 sieht man, dass in dem Eingangsteil 4 ein Durchgangsloch 30 ausgespart ist, das zum Durchführen einer Schraube 31 dient, mit deren Hilfe das Eingangsteil 4 des Drehschwingungsdämpfers 1 an der Kurbelwelle der Brennkraftmaschine befestigbar ist. Des Weiteren sieht man in Figur 2, dass der axiale Reibring 16 radial innen zwei Fasen 34, 35 aufweist. Die axiale Ausdehnung der Gleitlagerhülse 14 ist in Figur 2 mit a bezeichnet und beträgt zum Beispiel etwa 12 mm.

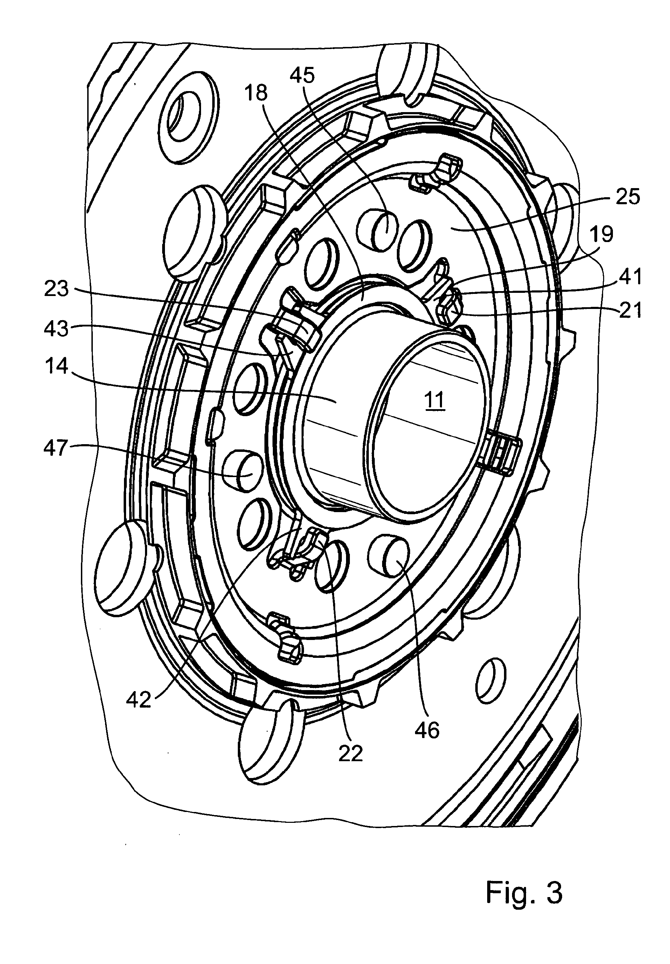

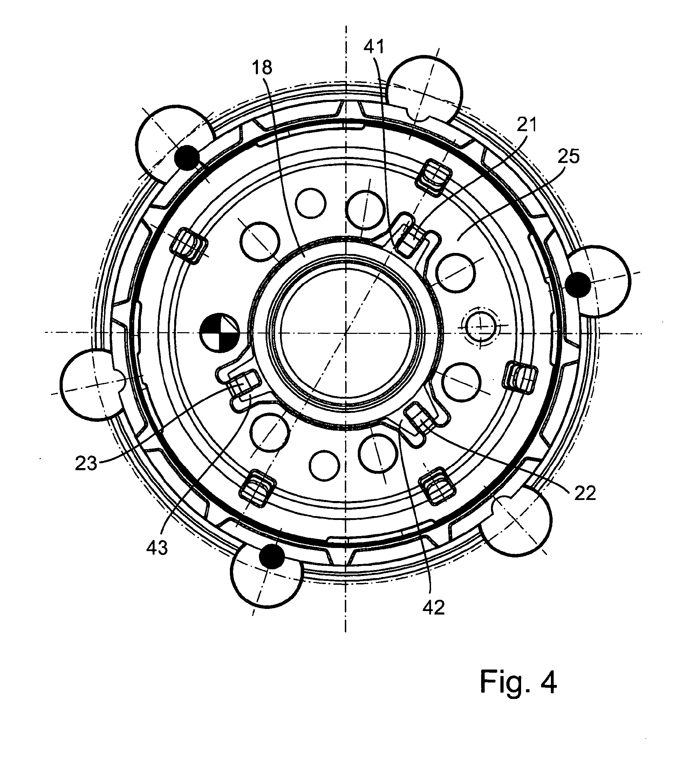

In den Figuren 3 und 4 sieht man, dass von der axialen Anlaufscheibe 18 drei radiale Ansätze 41, 42, 43 ausgehen, in die jeweils ein Finger 21, 22, 23 eingreift, der von dem Halteelement 25 ausgeht. Die Finger 21 bis 23 sowie die zugehörigen radialen Ansätze 41 bis 43 sind gleichmäßig über den Umfang des Halteelements 25 beziehungsweise der axialen Anlaufscheibe 18 verteilt angeordnet. In Figur 3 sieht man, dass die Gleitlagerhülse 14 und der axiale Reibring 16 an dem Eingangsteile 4 vormontierbar ist. Die vormontierte Einheit kann dann auf ein liegendes Ausgangsteil (5 in den Figuren 1 und 2) aufgesetzt werden, ohne dass sich die Anlaufscheibe 18 löst beziehungsweise herunterfällt. Des Weiteren sieht man in Figur 3, dass das Haltelement 25 mit Hilfe von Befestigungselementen 45 bis 47 an dem Eingangsteil 4 befestigt ist. Bei den Befestigungselementen 45 bis 47 handelt es sich zum Beispiel um Nietelemente.

### Bezuaszeichenliste

- 1.: Drehschwingungsdämpfungseinrichtung
- 4.: Eingangsteil
- 5.: Ausgangsteil
- 6.: Drehachse
- 7.: Energiespeicherelement
- 8.: Flanschelement
- 9.: Nietverbindungselement
- 10.: Lagereinrichtung
- 11.: Primärnabenteil
- 12.: Sekundärnabenteil
- 14.: Gleitlagerhülse
- 16.: axialer Reibring
- 18.: Anlaufscheibe
- 19.: Ausnehmung
- 21.: Finger
- 22.: Finger
- 23.: Finger
- 25.: Halteelement
- 28.: Reibeinrichtung
- 30.: Durchgangsloch
- a =: axiale Ausdehnung
- 31.: Schraube
- 34.: Fase
- 41.: radialer Ansatz
- 42.: radialer Ansatz
- 43.: radialer Ansatz
- 45.: Befestigungselement
- 46.: Befestigungselement
- 47.: Befestigungselement

## Patentansprüche

1. Drehschwingungsdämpfungseinrichtung (1) mit einer Primärmasse (4) und einer Sekundärmasse (5), die entgegen der Wirkung von mindestens einem Drehschwingungsdämpfungselement (7) und mit Hilfe einer Lagereinrichtung (10), die eine axiale Anlaufscheibe (18), einen axialen Reibring (16) und eine radiale Gleitlagerhülse (14) umfasst, relativ zu der Primärmasse (4) verdrehbar ist, **dadurch gekennzeichnet, dass** die axiale Anlaufscheibe (18) drehfest mit der Primärmasse (4) verbunden ist.

2. Drehschwingungsdämpfungseinrichtung nach Anspruch 1, **dadurch gekennzeichnet, dass** der axiale Reibring (16) zwischen der axialen Anlaufscheibe (18) und der Sekundärmasse (5) angeordnet ist.

3. Drehschwingungsdämpfungseinrichtung nach einem der vorhergehenden Ansprüche, **dadurch gekennzeichnet, dass** die axiale Anlaufscheibe (18) mindestens einen radialen Ansatz (41-43) aufweist, der drehfest mit der Primärmasse (4) verbunden ist.

4. Drehschwingungsdämpfungseinrichtung nach Anspruch 3, **dadurch gekennzeichnet, dass** sich der radiale Ansatz (41-43) mit einem Mitnehmerelement in Eingriff befindet, das von einem Halteelement (25) ausgeht, das an der Primärmasse (4) befestigt ist.

5. Drehschwingungsdämpfungseinrichtung nach Anspruch 4, **dadurch gekennzeichnet, dass** das Mitnehmerelement einen Mitnehmerfinger (21-23) umfasst, der in eine Ausnehmung greift, die in dem radialen Ansatz (41-43) vorgesehen ist.

6. Drehschwingungsdämpfungseinrichtung nach Anspruch 5, **dadurch gekennzeichnet, dass** sich der Mitnehmerfinger (21-23) teilweise in axialer Richtung erstreckt.

7. Drehschwingungsdämpfungseinrichtung nach Anspruch 6, **dadurch gekennzeichnet, dass** sich der Mitnehmerfinger (21-23) am Ende in radialer Richtung erstreckt.

8. Drehschwingungsdämpfungseinrichtung nach einem der Ansprüche 4 bis 7, **dadurch gekennzeichnet, dass** das Halteelement (25) mit Hilfe von Befestigungselementen (45-47) an der Primärmasse (4) befestigt ist.

9. Drehschwingungsdämpfungseinrichtung nach Anspruch 3, **dadurch gekennzeichnet, dass** der radiale Ansatz ein Durchgangsloch für eine Nietwarze aufweist, durch welche die Anlaufscheibe (18) an der Primärmasse (4) befestigt ist.

10. Drehschwingungsdämpfungseinrichtung nach einem der Ansprüche 3 bis 9, **dadurch gekennzeichnet, dass** die axiale Anlaufscheibe mehrere, insbesondere zwei oder drei, radiale Ansätze (41-43) aufweist, die drehfest mit der Primärmasse (4) verbunden sind.
